# EUROPEAN PATENT SPECIFICATION

(11) **EP 2 701 068 B1**
(45) Date of publication and mention of the grant of the patent: **01.02.2017**
(21) Application number: 12773760.9
(22) Date of filing: 18.04.2012
(51) Int. Cl.: H04L 29/06, H04L 29/08

(54) **NETWORK ACCESS SYSTEM**
NETZWERKZUGRIFFSSYSTEM
SYSTÈME D'ACCÈS RÉSEAU

(30) Priority: 19.04.2011 JP 2011093425
(43) Date of publication of application: 26.02.2014
(73) Proprietor: Murakumo Corporation, Tokyo 153-0061 (JP)
(72) Inventor: WATANABE, Takahiro, Tokyo 153-0061 (JP)
(74) Representative: Wallin, Nicholas James
(86) International application number: PCT/JP2012/060485
(87) International publication number: WO 2012/144527

(56) References cited:
- JP-A- 2003 131 961
- JP-A- 2006 525 563
- JP-A- 2007 164 527
- JP-A- 2007 272 909

## Description

### Technical Field

The present invention relates to a method for managing two or more real servers which are connected to a network and to which access is allocated by a load balancer.

### Related Art

Technology is known in which, when accessing a real server which constitutes a data center from a browser application of a client terminal via a network, access is allocated to a plurality of real servers by round robin scheduling, using a DNS (domain name server) (Patent Document 1: Japanese Patent Application Publication No. 2003-115862).

In this DNS round robin scheduling, a plurality of IP addresses are previously registered in a domain name server (DNS), in relation to host name enquiries from a client terminal, and the load on real servers is distributed, but since this method simply toggles successively between a plurality of IP addresses, even distribution between the real servers is not necessarily guaranteed, and there has been a problem in that registering all of the IP addresses for the real server group, which in recent years have come to be constituted by several tens or several hundreds of real servers, in the DNS, consumes a huge amount of IP address resources and is not practicable.

Therefore, load distribution technology using a load balancer is known, in order to distribute the load as evenly as possible between the real servers.

According to this technology, when a HTTP request reaches an IP address which has been reported by the DNS, the load balancer allocates that address, but there must be a guarantee that the same result will be obtained, whichever the load balancer involved and whichever the real server that is the object of the allocation process. Therefore, synchronization between all of the real servers is desirable, but due to the large load that synchronization processing imposes, this has not been practicable. Furthermore, although it may be conceivable to synchronize specific real servers which are previously associated with each other, from among the plurality of real servers, if access is made to a real server for which synchronization has not been guaranteed, then there has been a possibility of the occurrence of delays in access to the real server due, for instance, to the need to copy data from a real server that has completed synchronization before access is permitted.

Conceivable means for resolving this is to create a system which stores a combination (pair) of a load balancer and a real sever, for each session, in each of the load balancers, so that access to the same real server is guaranteed in the next session.

However, even with a method of this kind, if a fault occurs in the specified load balancer, the actual combination information cannot be obtained and there is a concern that it may not be possible to access the prescribed real server.

### Prior art references

### Patent references

Patent Document 1 : Japanese Patent Application Publication No. 2003-115862
Patent Document 2 : US Patent Application Publication No. 2007/136434 A1 - This document discusses enabling an operation checker to select a specific one of a plurality of servers on a load distribution system for a server test or operation monitoring.

### SUMMARY OF INVENTION

### Problems to be Solved by the Invention

The present invention was devised in view of the points described above, a first object thereof being to achieve technology which enables access to a target real server, whichever the load balancer via which access is made.

A second object of the present invention is to achieve access to a real server while guaranteeing the security of real server information.

### Means for Solving the Problem

The present invention adopts the means described below in order to solve the aforementioned problem.

Claim 1 of the present invention is a network access system which performs access to a data center constituted by a plurality of real servers, from a client terminal via a network, comprising: a domain name server which reports access identification information of any one of the plurality of real servers on the basis of an access request message from the client terminal, to the client terminal; and a plurality of load balancers which are adapted to allocate a connection with the client terminal on the basis of the access request message from the client terminal including the access identification information specified by the domain name server, characterised in that each of the plurality of load balancers is adapted to execute: processing for determining a real server to be connected by a first access request message including the access identification information from the client terminal; processing for generating server identification information for the determined real server and encoding the generated server identification information which can be decoded by using key information shared between the plurality of load balancers; processing for adding the encoded server identification information to the access identification information; processing for achieving connection from the client terminal to the determined real server by sending the access request message to the determined real server; processing for upon receiving, from the client terminal, a second access request message based on the access identification information to which the encoded server identification information has been added, after a response message including the encoded server identification information has been sent back to the client terminal from the determined real server via the network; processing for reading out the encoded server identification information from the access identification information in the second access request message and decoding the encoded server identification information by using the key information shared between the plurality of load balancers; and processing for sending the access request message to the real server identified by using the decoded server identification information.

Claim 2 of the present invention is the network access system according to claim 1, wherein the access identification information is a HTTP request, and the encoded server identification information in the access identification information added to the second access request message from the client terminal is acquired from cookie information stored in the client terminal by the first response message from the real server.

Claim 3 of the present invention is an access method for a network system which performs access to a data center constituted by a plurality of real servers, from a client terminal via a network, the network including a plurality of load balancers which allocate a connection with the client terminal on the basis of an access request message from the client terminal including access identification information specified by a domain name server, characterised in that each of the plurality of load balancers executes: determining a real server to be connected by a first access request message including the access identification information from the client terminal; generating server identification information for the determined real server and encoding the generated server identification information which can be decoded by using key information shared between the plurality of load balancers; adding the encoded server identification information to the access identification information; achieving connection from the client terminal to the determined real server by sending the access request message to the determined real server; upon receiving, from the client terminal, a second access request message based on the access identification information to which the encoded server identification information has been added, after a response message including the encoded server identification information has been sent back to the client terminal from the determined real server via the network; reading out the encoded server identification information from the access identification information in the second access request message and decoding the encoded server identification information by using the key information shared between the plurality of load balancers; and sending the access request message to the real server identified by using the decoded server identification information.

Claim 4 of the present invention is a computer-exectuable access program for a network system which performs access to a data center constituted by a plurality of real servers, from a client terminal via a network, the network including a plurality of load balancers which allocate a connection with the client terminal on the basis of an access request message from the client terminal including access identification information specified by a domain name server, characterised in that the access program makes each of the plurality of load balancers execute: determining a real server to be connected by a first access request message from the client terminal; generating server identification information for the determined real server and encoding the generated server identification information which can be decoded by using key information shared between the plurality of load balancers; adding the encoded server identification information to the access identification information; achieving connection from the client terminal to the determined real server by sending the access request message to the determined real server; upon receiving, from the client terminal, a second access request message based on the access identification information to which the encoded server identification information has been added, after a response message including the encoded server identification information has been sent back to the client terminal from the determined real server via the network; reading out the encoded server identification information from the access identification information in the second access request message and decoding the encoded server identification information using the key information shared between the plurality of load balancers; and sending the access request message to the real server identified by using the decoded server identification information.

### Effects of the Invention

According to the present invention, it is possible to achieve technology which enables access to a target real server, irrespective of the load balancer through which access is made. Furthermore, it is possible to guarantee the security of real server information when accessing the real server.

### BRIEF DESCRIPTION OF THE DRAWINGS

Fig. 1 is a block diagram showing a general composition of a network system according to the present invention.
Fig. 2 is a hardware block diagram showing an internal composition of a load balancer (LB) according to an embodiment of the invention.
Fig. 3 is a functional illustrative diagram of a load balancer (LB) according to an embodiment of the invention.

### EMBODIMENTS OF THE INVENTION

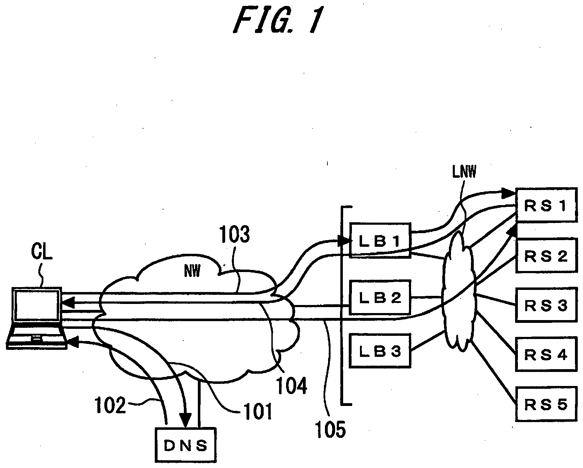

Fig. 1 is a block diagram showing a general composition of a network system according to an embodiment of the present invention.

In Fig. 1, a client terminal (CL) is a generic personal computer, which may be any computer capable of network access (known as TCP/IP-based Internet access). Furthermore, the client terminal may also be a smartphone such as an iPhone (registered trademark of Apple Inc.), an Android phone (registered trademark of Google Inc.) or the like, a PDA or an i-mode device (registered trademark of NTT DoCoMo).

The DN server (DNS) is a so-called domain name server, which has a function of sending back a corresponding IP address (102), in response to a host name enquiry (101) from a client terminal.

Furthermore, the real servers which constitute a data center are, for example, a mail-order site, which is constituted by a plurality of real servers (RS1 to 5).

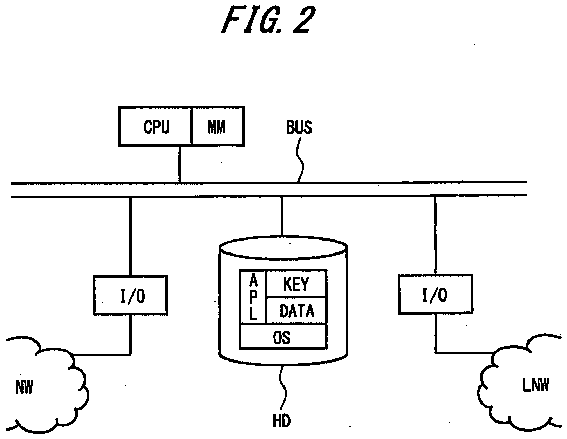

A load balancer (LB) is interposed between the network (NW) and the local network (LNW) as shown in Fig. 2, and a large-scale storage apparatus (HD) centered about a central processing unit (CPU) and a main memory (MM) and connected via a bus (BUS), is provided. A load distribution program (APL), key information (KEY), user data (DATA), and the like, are registered, together with an operating system (OS), in the large-scale storage apparatus (HD). In other words, the functions of the present embodiment are achieved by performing allocation to real servers (RS1 to 5) which are accessed by the central processing unit (CPU) reading the load distribution program (APL) via the bus (BUS) and main memory (MM).

Here, the load balancer (LB) may also be provided above the storage apparatus, as a virtual apparatus in any one of the real servers (RS1 to 5), aside from being realized by hardware such as that shown in Fig. 2. However, for the convenience of the explanation, the description given below relates to a case where the load balancer is constituted by hardware.

When there is a host name enquiry (101) from a client terminal (CL), the DN server (DNS) sends back the IP address corresponding to that host name, to the client terminal (CL) (102).

In this case, the IP addresses of three load balancers (LB1 to 3), "xxx1", "xxx2", "xxx3" (shown in abbreviated form for convenience), are registered in the DN server (DNS) in respect of the specified host name (for example, "abc.com"), and are allocated sequentially in each session by a DNS round robin method, and reported to the client terminal (CL).

Thereupon, the client terminal (CL) generates and sends an access request message (HTTP request) to the IP address (here, "xxx1") of the load balancer (LB1) reported by the DN server (DNS) (103).

Here, although not shown in the drawings, upon receiving a first access request message (HTTP request) from the client terminal (CL), the load balancer (LB1) determines the real server that ought to be connected (for example, RS1), generates server identification information (for example, ID = 001) which identifies this real server, and adds this information to the request header of the HTTP request.

The HTTP request in question is sent to the real server (RS1) determined above.

In a network system configuration of this kind, a user is able to access the mail-order site from the client terminal (CL) via the network (NW), simply by sending an HTTP request specifying a URL, which is a generic term for a real server group, without being aware of the individual real servers (RS1 to RS5).

Here, the load balancers (LB1 to LB3) forming load distributing apparatuses are interposed in order to allocate HTTP requests received via the network (NW) to the individual real servers (RS1 to RS5). The HTTP request is sent via the local network (LNW) to the real server (RS1) allocated by the load balancer (LB).

Next, when the real server (RS1) which has received the HTTP request has carried out prescribed processing (for example, processing for adding a product to a shopping cart on the mail-order site), a response message (HTTP response) including the server identification information (ID = 001) is sent back to the client terminal (CL) which originated the request via the network (NW) (104).

In the client terminal (CL), the server identification information (ID = 001) is read out from among the received response message, and this is stored in a storage apparatus of the client terminal, as cookie information.

Subsequently, when the client terminal (CL) sends a HTTP request to this mail-order site once again, the server identification information (ID = 001) is read out from the cookie information and this information is added to the request header of the HTTP request and sent (105).

The load balancer (for example, LB3) which has received this second HTTP request (105) reads out server identification information (ID = 001) from the request in question, and sends a HTTP request to the identified real server (RS1) in accordance with this server identification information.

In this way, according to the present embodiment, a load balancer (LB1) which has received a first HTTP request (103) generates server identification information (ID = 001), and adds this information to the HTTP request. The real server (RS1) receiving the request also includes this server identification information in the HTTP response and sends it back to the client terminal (104). The client terminal (CL) then includes this server identification information (ID = 001) as cookie information when generating the next HTTP request (105), whereby access can be achieved to the same real server as in the first access operation, even when a different load balancer (LB2) to the first access is processing the HTTP request.

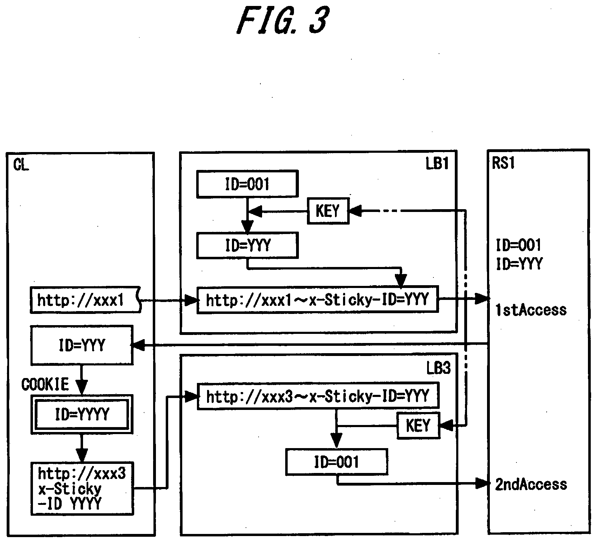

When the server identification information (ID = 001) is added to the HTTP request as plain text, as described above, there is a possibility of the real server being identified by a third party. In order to enhance security, in the present embodiment, the function shown in Fig. 3 is added.

Similarly to the description given above, when the load balancer (LB) determines the real server (for example, RS1) that ought to be connected by the first access request message (HTTP request "http://xxx1") (103) from the client terminal, the load balancer generates server identification information (for example, ID = 001) for identifying that real server.

Next, the central processing unit (CPU) of the load balancer (LB1) reads out the key information (KEY) and encodes the server identification information using this key information (KEY) (ID = YYY). The key information (KEY) used in this case is key information based on secret key encoding, which is established upon setting up the load balancers (LB1 to 3) and which is shared by all of the load balancers (LB1 to LB3) .

The encoded server identification information (ID = YYY) generated by the load balancer (LB1) is added to the request header of the HTTP request. More specifically, "X-Sticky-ID = YYY" is added to the message header following the request line of "http://xxx1", and is sent to the real server (RS1).

Next, when the real server (RS1) which has received the HTTP request has carried out prescribed processing (for example, processing for adding a product to a shopping cart on the mail-order site), a response message (HTTP response) having the encoded server identification information (ID = YYY) written to the request header is sent back to the client terminal (CL) which originated the request via the network (NW) (104).

In the client terminal (CL), the encoded server identification information (ID = YYY) is read out from the received response message (HTTP response), and this is stored in a storage apparatus of the client terminal, as cookie information.

Subsequently, when the client terminal (CL) sends a HTTP request to this mail-order site once again, the encoded server identification information (ID = YYY) is read out from the cookie information and "X-Sticky-ID = YYY" is added to the request header "http: xxx1" of the HTTP request (105).

In this case, the client terminal (CL) may make a host name enquiry to the DN server (DNS) once again. In a case of this kind, there is a possibility that, due to the DNS round robin function, an IP address (http:xxx3) of a different load balancer (LB2) may be sent back.

Even in this case, the client terminal reads out the encoded server identification information from the cookie information held by the terminal, and this information "X-Sticky-ID = YYY" is added to the message header which follows the request line "http:xxx3" of the HTTP request (105).

The load balancer (here, LB3) which has received the second HTTP request (105) reads out the encoded server identification information (ID = YYY) from the HTTP request, and encodes this on the basis of key information (KEY) which is shared with the load balancer (LB1). The load balancer sends the HTTP request to the identified real server (RS1), on the basis of the server identification information (ID = 001) obtained as a result of this. In this case, desirably, the encoded server identification information (ID = YYY) is included in the request header of the HTTP request. Consequently, the third and subsequent HTTP requests can also reach the identified real server (RS1).

In this way, according to the present embodiment, a load balancer (LB1) which has received a first HTTP request (103) generates server identification information (ID = 001), encodes this information, and adds it to the HTTP request. The real server (RS1) includes the encoded server identification information (ID = YYY) in the response message (HTTP response) and sends the message back to the client terminal (CL) (104). Moreover, since the encoded server identification information (ID = YYY) is included in the request header as cookie information when the client terminal (CL) generates the next HTTP request (105), then when a load balancer (LB3) that is different to the load balancer (LB1) in the case of the first access processes the HTTP request (105), that load balancer (LB3) can identify the real server (RS1) that ought to be accessed by decoding using the key information shared between the load balancers.

Moreover, since the encoded server identification information (ID = YYY) is included in the HTTP request and the response message (response) in a still encoded state, in both the network (NW) and the local network (LNW), it is possible to access the real server with high security, without information about the real server (RS1) that is to be accessed being leaked to a third party.

Above, the present invention was described on the basis of embodiments, but the present invention is not limited to the embodiments described above. For example, in the client terminal (CL), the encoded server identification information (ID = YYY) is registered in the storage apparatus of the client terminal as cookie information, but the information does not have to be a cookie. In summary, any form is possible so long as a response message (response) including the encoded server identification information from the real server (RS1) can be held by the client terminal (CL).

Furthermore, an access request from a client terminal to a real server was described by taking an HTTP request as an example, but the invention is not limited to this and the request may also be based on another communications protocol. In short, the request may be any request, provided that the client terminal can hold information and the load balancer can read out and interpret this information on the basis of an access request to which this information has been appended.

### Industrial Applicability

The present invention can be used for network access in a data center constituted by a plurality of real servers, such as a mail-order site.

## Claims

1. A network access system for performing access to a data center constituted by a plurality of real servers (RS1-RS5), from a client terminal (CL) via a network (NW), comprising:
a domain name server (DNS) adapted to report access identification information of any one of the plurality of real servers (RS1-RS5) on the basis of an access request message from the client terminal (CL), to the client terminal (CL); and
a plurality of load balancers (LB1-B3) adapted to allocate a connection with the client terminal (CL) on the basis of the access request message from the client terminal (CL) including the access identification information specified by the domain name server (DNS),
**characterised in that** each of the plurality of load balancers (LB1-LB3) is adapted to execute:
processing for determining a real server (RS1-RS5) to be connected by a first access request message including the access identification information from the client terminal (CL);
processing for generating server identification information for the determined real server (RS1-RS5) and encoding the generated server identification information which can be decoded by using key information shared between the plurality of load balancers (LB1-LB3);
processing for adding the encoded server identification information to the access identification information;
processing for achieving connection from the client terminal (CL) to the determined real server (RS1-RS5) by sending the access request message to the determined real server (RS1-RS5);
processing for upon receiving, from the client terminal (CL), a second access request message based on the access identification information to which the encoded server identification information has been added, after a response message including the encoded server identification information has been sent back to the client terminal (CL) from the determined real server (RS1-RS5) via the network (NW);
processing for reading out the encoded server identification information from the access identification information in the second access request message and decoding the encoded server identification information by using the key information shared between the plurality of load balancers (LB1-LB3); and
processing for sending the access request message to the real server (RS1-RS5) identified by using the decoded server identification information.

2. The network access system according to claim 1, wherein the access identification information is a HTTP request, and the encoded server identification information in the access identification information added to the second access request message from the client terminal (CL) is acquired from cookie information stored in the client terminal (CL) by the first response message from the real server (RS1-RS5).

3. An access method for a network system which performs access to a data center constituted by a plurality of real servers (RS1-RS5), from a client terminal (CL) via a network (NW),
the network (NW) including a plurality of load balancers (LB1-LB3) which allocate a connection with the client terminal (CL) on the basis of an access request message from the client terminal (CL) including access identification information specified by a domain name server (DNS),
**characterised in that** each of the plurality of load balancers (LB1-LB3) executes:
determining a real server (RS1-RS5) to be connected by a first access request message including the access identification information from the client terminal (CL);
generating server identification information for the determined real server (RS1-RS5) and encoding the generated server identification information which can be decoded by using key information shared between the plurality of load balancers (LB1-LB3);
adding the encoded server identification information to the access identification information;
achieving connection from the client terminal (CL) to the determined real server (RS1-RS5) by sending the access request message to the determined real server (RS1-RS5);
upon receiving, from the client terminal (CL), a second access request message based on the access identification information to which the encoded server identification information has been added, after a response message including the encoded server identification information has been sent back to the client terminal (CL) from the determined real server (RS1-RS5) via the network (NW);
reading out the encoded server identification information from the access identification information in the second access request message and decoding the encoded server identification information by using the key information shared between the plurality of load balancers (LB1-LB3); and
sending the access request message to the real server (RS1-RS5) identified by using the decoded server identification information.

4. A computer-exectuable access program for a network system which performs access to a data center constituted by a plurality of real servers (RS1-RS5), from a client terminal (CL) via a network (NW),
the network (NW) including a plurality of load balancers (LB1-LB3) which allocate a connection with the client terminal (CL) on the basis of an access request message from the client terminal (CL) including the access identification information specified by a domain name server (DNS),
**characterised in that** the access program makes each of the plurality of load balancers (LB1-LB3) execute:
determining a real server (RS1-RS5) to be connected by a first access request message from the client terminal (CL);
generating server identification information for the determined real server (RS1-RS5) and encoding the generated server identification information which can be decoded by using key information shared between the plurality of load balancers (LB1-LB3);
adding the encoded server identification information to the access identification information;
achieving connection from the client terminal (CL) to the determined real server (RS1-RS5) by sending the access request message to the determined real server (RS1-RS5);
upon receiving, from the client terminal (CL), a second access request message based on the access identification information to which the encoded server identification information has been added, after a response message including the encoded server identification information has been sent back to the client terminal (CL) from the determined real server (RS1-RS5) via the network (NW);
reading out the encoded server identification information from the access identification information in the second access request message and decoding the encoded server identification information by using the key information shared between the plurality of load balancers (LB1-LB3); and
sending the access request message to the real server (RS1-RS5) identified by using the decoded server identification information.

## Patentansprüche

1. Ein Netzwerkzugriffssystem zur Durchführung eines Zugriffs von einem Kundenterminal (CL) über ein Netzwerk (NW) auf ein Datenzentrum, das durch eine Vielzahl von Real-Servern (RS1-RS5) gebildet ist, umfassend:
einen Domain Name Server (DNS), der dazu ausgebildet ist, auf Basis einer Zugangs-Anfrage-Nachricht des Kundenterminals (CL) Zugangs-Identifikations-Informationen von einem der mehreren Real-Server (RS1-RS5) an den Kundenterminal (CL) zu berichten;
und
eine Vielzahl von Lastverteilern (LB1-LB3), die dazu ausgebildet sind, dem Kundenterminal (CL) auf Basis der Zugangs-Anfrage-Nachricht von dem Kundenterminal (CL) umfassend die Zugangs-Identifikations-Information des Domain Name Servers (DNS) eine Verbindung zuzuweisen,
**dadurch gekennzeichnet, dass** jeder der mehreren Lastverteiler (LB1-LB3) dazu ausgebildet ist folgendes auszuführen:
eine Verarbeitung zum Bestimmen eines zu verbindenden Real-Servers (RS1-RS5) durch eine erste Zugangs-Anfrage-Nachricht, die die Zugangs-Identifikations-Information von dem Kundenterminal (CL) enthält;
eine Verarbeitung zum Erzeugen einer Server-Identifikations-Information für den bestimmten Real-Server (RS1-RS5) und zum Kodieren der erzeugten Server-Identifikations-Information, die durch Verwendung einer zwischen der Vielzahl von Lastverteilern (LB1-LB3) geteilten Schlüssel-Information dekodiert werden kann;
eine Verarbeitung zum Hinzufügen der kodierten Server-Identifikations-Information zu der Zugangs-Identifikations-Information;
eine Verarbeitung zum Erzielen einer Verbindung von dem Kundenterminal (CL) mit dem bestimmten Real-Server (RS1-RS5) durch Senden der Zugangs-Anfrage-Nachricht an den bestimmten Real-Server (RS1-RS5);
eine Verarbeitung zum Erhalten einer zweiten Zugangs-Anfrage-Nachricht von dem Kundenterminal (CL), die auf der Zugangs-Identifikations-Information beruht, zu der die kodierte Server-Identifikations-Information hinzugefügt worden ist, nachdem eine Antwort-Nachricht von dem bestimmten Real-Server (RS1-RS5) über das Netzwerk zurück zu dem Kundenterminal (CL) gesendet worden ist, die die kodierte Server-Identifikations-Information enthält;
eine Verarbeitung zum Auslesen der kodierten Server-Identifikations-Information aus der Zugangs-Identifikations-Information in der zweiten Zugangs-Anfrage-Nachricht und zum Dekodieren der kodierten Server-Identifikations-Information durch Verwendung der zwischen der Vielzahl von Lastverteilern (LB1-LB3) geteilten Schlüssel-Information; und
eine Verarbeitung zum Senden der Zugangs-Anfrage-Nachricht an den Real-Server (RS1-RS5), der unter Verwendung der dekodierten Server-Identifikations-Information identifiziert ist.

2. Das Netzwerkzugriffssystem nach Anspruch 1, wobei die Zugangs-Identifikations-Information eine HTTP-Anfrage ist und die kodierte Server-Identifikations-Information in der Zugangs-Identifikations-Information, die der zweiten Zugangs-Anfrage-Nachricht des Kundenterminals (CL) zugefügt ist, aus einer Cookie-Information gewonnen ist, die durch die erste Antwort-Nachricht von dem Real-Server (RS1-RS5) in dem Kundenterminal (CL) gespeichert wird.

3. Ein Zugangsverfahren für ein Netzwerksystem, das einen Zugang von einem Kundenterminal (CL) über ein Netzwerk (NW) zu einem Datenzentrum, das durch eine Vielzahl von Real-Servern (RS1-RS5) gebildet ist, durchführt,
das Netzwerk (NW) umfasst eine Vielzahl von Lastverteilern (LB1-LB3), die auf Basis einer Zugangs-Anfrage-Nachricht von dem Kundenterminal (CL), die eine von einem Domain Name Server (DNS) bestimmte Zugangs-Identifikations-Information enthält, eine Verbindung mit dem Kundenterminal (CL) zuweisen
**dadurch gekennzeichnet, dass** jeder der mehreren Lastverteiler (LB1-LB3) folgendes ausführt:
Bestimmen eines zu verbindenden Real-Servers (RS1-RS5) durch eine erste Zugangs-Anfrage-Nachricht, die die Zugangs-Identifikations-Information des Kundenterminals (CL) enthält;
Erzeugung einer Server-Identifikations-Information für den bestimmten Real-Server (RS1-RS5) und Kodierung der erzeugten Server-Identifikations-Information, die durch Verwendung einer zwischen der Vielzahl von Lastverteilern (LB1-LB3) geteilten Schlüssel-Information dekodiert werden kann;
Hinzufügen der kodierten Server-Identifikations-Information zu der Zugangs-Identifikations-Information;
Erzielen einer Verbindung von dem Kundenterminal (CL) mit dem bestimmten Real-Server (RS1-RS5) durch Senden der Zugangs-Anfrage-Nachricht an den bestimmten Real-Server (RS1-RS5);
Erhalten einer zweiten Zugangs-Anfrage-Nachricht von dem Kundenterminal (CL), die auf der Zugangs-Identifikations-Information beruht, zu der die kodierte Server-Identifikations-Information hinzugefügt worden ist, nachdem eine Antwort-Nachricht von dem bestimmten Real-Server (RS1-RS5) über das Netzwerk zurück zu dem Kundenterminal (CL) gesendet worden ist, die die kodierte Server-Identifikations-Information enthält;
Auslesen der kodierten Server-Identifikations-Information aus der Zugangs-Identifikations-Information in der zweiten Zugangs-Anfrage-Nachricht und Dekodieren der kodierten Server-Identifikations-Information durch Verwendung der zwischen der Vielzahl von Lastverteilern (LB1-LB3) geteilten Schlüssel-Information; und
Senden der Zugangs-Anfrage-Nachricht an den Real-Server (RS1-RS5), der unter Verwendung der dekodierten Server-Identifikations-Information identifiziert ist.

4. Ein von einem Computer ausführbares Zugangs-Programm für ein Netzwerksystem, das einen Zugang von einem Kundenterminal (CL) über ein Netzwerk (NW) zu einem von einer Vielzahl von Real-Servern (RS1-RS5) gebildeten Datenzentrum durchführt,
das Netzwerk (NW) umfasst eine Vielzahl von Lastverteilern (LB1-LB3), die auf Basis einer Zugangs-Anfrage-Nachricht von dem Kundenterminal (CL), die die von einem Domain Name Server (DNS) bestimmte Zugangs-Identifikations-Information enthält, eine Verbindung mit dem Kundenterminal (CL) zuweisen,
**dadurch gekennzeichnet, dass** das Zugangs-Programm jeden der mehreren Lastverteiler (LB1-LB3) folgendes ausführen lässt:
Bestimmen eines zu verbindenden Real-Servers (RS1-RS5) durch eine erste Zugangs-Anfrage-Nachricht von dem Kundenterminal (CL);
Erzeugung einer Server-Identifikations-Information für den bestimmten Real-Server (RS1-RS5) und Kodierung der erzeugten Server-Identifikations-Information, die durch Verwendung einer zwischen der Vielzahl von Lastverteilern (LB1-LB3) geteilten Schlüssel-Information dekodiert werden kann;
Hinzufügen der kodierten Server-Identifikations-Information mit der Zugriffs-Identifikations-Information;
Erzielen einer Verbindung von dem Kundenterminal (CL) mit dem bestimmten Real-Server (RS1-RS5) durch Senden der Zugangs-Anfrage-Nachricht an den bestimmten Real-Server (RS1-RS5);
Erhalten einer zweiten Zugangs-Anfrage-Nachricht von dem Kundenterminal (CL), die auf der Zugangs-Identifikations-Information beruht, zu der die kodierte Server-Identifikations-Information hinzugefügt worden ist, nachdem eine Antwort-Nachricht von dem bestimmten Real-Server (RS1-RS5) über das Netzwerk zurück zu dem Kundenterminal (CL) gesendet worden ist, die die kodierte Server-Identifikations-Information enthält;
Auslesen der kodierten Server-Identifikations-Information aus der Zugangs-Identifikations-Information in der zweiten Zugangs-Anfrage-Nachricht und dekodieren der kodierten Server-Identifikations-Information durch Verwendung der zwischen der Vielzahl von Lastverteilern (LB1-LB3) geteilten Schlüssel-Information; und
Senden der Zugangs-Anfrage-Nachricht an den Real-Server (RS1-RS5), der durch Verwendung der dekodierten Server-Identifikations-Information identifiziert ist.

## Revendications

1. Système d'accès réseau permettant d'accéder à un centre de données constitué par un ensemble de serveurs réels (RS1-RS5) à partir d'un terminal client (CL) par l'intermédiaire d'un réseau (NW) comprenant :
un serveur de nom de domaine (DNS) susceptible de signaler une information d'identification d'accès de l'un quelconque parmi l'ensemble de serveurs réels (RS1-RS5) sur le fondement d'un message de demande d'accès provenant du terminal client (CL) à ce terminal client (CL), et
un ensemble d'éléments de partage de charge (LB1-B3) permettant d'attribuer une connexion avec le terminal client (CL) sur le fondement du message de demande d'accès provenant du terminal client (CL) comprenant l'information d'identification d'accès précisée par le serveur de nom de domaine (DNS),
**caractérisé en ce que**
chacun des éléments de partage de charge (LB1-LB3) est susceptible de déterminer un serveur réel (RS1-RS5) devant être connecté par un premier message de demande d'accès comprenant l'information d'identification d'accès provenant du terminal client (CL),
générer une information d'identification de serveur pour le serveur réel (RS1-RS5) déterminé, et coder l'information d'identification de serveur générée qui peut être décodée en utilisant une information clef commune aux éléments de partage de charge (LB1-LB3),
ajouter l'information d'identification de serveur codée à l'information d'identification d'accès,
réaliser la connexion du terminal client (CL) au serveur réel (RS1-RS5) déterminé en envoyant le message de demande d'accès au serveur réel (RS1-RS5) déterminé,
- à la réception à partir du terminal client (CL) d'un second message de demande d'accès sur le fondement de l'information d'identification d'accès à laquelle l'information d'identification de serveur codée a été ajoutée après qu'un message de réponse comprenant l'information d'identification de serveur codé ait été renvoyée au terminal client (CL) à partir du serveur réel (RS1-RS5) déterminé par l'intermédiaire du réseau (NW),
- extraire l'information d'identification de serveur codée de l'information d'identification d'accès dans le second message de demande d'accès et décoder l'information d'identification de serveur codée en utilisant l'information clef commune aux éléments de partage (LB1-LB3), et
- envoyer le message de demande d'accès au serveur réel (RS1-RS5) identifié en utilisant l'information d'identification de serveur décodée.

2. Système d'accès réseau conforme à la revendication 1,
dans lequel l'information d'identification d'accès est une demande http et l'information d'identification de serveur codée de l'information d'identification d'accès ajoutée au second message de demande d'accès provenant du terminal client (CL) est obtenue à partir d'une information de cookie enregistrée dans le terminal client (CL) par le premier message de réponse provenant du serveur réel (RS1-RS5).

3. Procédé d'accès destiné à un système réseau permettant l'accès à un centre de données constitué par un ensemble de serveurs réels (RS1-RS5) à partir d'un terminal client (CL) par l'intermédiaire d'un réseau (NW),
le réseau (NW) comprenant un ensemble d'éléments de partage de charge (LB1-LB3) qui attribuent une connexion avec le terminal client (CL) sur le fondement d'un message de demande d'accès provenant du terminal client (CL) comprenant une information d'identification d'accès précisée par un serveur de nom de domaine (DNS),
**caractérisé en ce que** chacun des éléments de partage de charge (LB1-LB3) exécute des étapes consistant à :
déterminer un serveur réel (RS1-RS5) devant être connecté par un premier message de demande d'accès comprenant l'information d'identification d'accès provenant du terminal client (CL),
générer une information d'identification de serveur pour le serveur réel (RS1-RS5) déterminé et coder l'information d'identification de serveur générée qui peut être décodé en utilisant une information clef commune aux éléments de partage de charge (LB1-LB3),
ajouter l'information d'identification de serveur codée à l'information d'identification d'accès,
réaliser la connexion du terminal client (CL) avec le serveur réel déterminé (RS1-RS5) en envoyant le message de demande d'accès au serveur réel (RS1-RS5) déterminé,
à la réception, à partir du terminal client (CL) d'un second message de demande d'accès basé sur l'information d'identification d'accès à laquelle l'information d'identification de serveur codée a été ajoutée, après qu'un message de réponse comprenant l'information d'identification de serveur codée ait été renvoyée vers le terminal client (CL) à partir du serveur réel (RS1-RS5) déterminé par l'intermédiaire du réseau (NW), extraire l'information d'identification de serveur codée de l'information d'identification d'accès dans le second message de demande d'accès et décoder l'information d'identification de serveur codée en utilisant l'information commune aux éléments de partage clef de charge (LB 1-LB3), et
envoyer le message de demande d'accès au serveur réel (RS1-RS5) identifié en utilisant l'information d'identification de serveur décodée.

4. Programme d'accès exécutable par ordinateur à un système réseau qui permet l'accès à un centre de données constitué par un ensemble de serveurs réels (RS1-RS5) à partir d'un terminal client (CL) par l'intermédiaire d'un réseau (NW),
ce réseau (NW) comprenant un ensemble d'éléments de partage de charge (LB1-LB3) qui attribuent une connexion avec le terminal client (CL) sur le fondement d'un message de demande d'accès précisée du terminal client (CL) comprenant l'information d'identification d'accès précisée par un serveur de nom de domaine (DNS),
**caractérisé en ce que**
le programme d'accès commande chacun des éléments de partage de charge (LB1-LB3) pour
déterminer un serveur réel (RS1-RS5) devant être connecté par un premier message de demande d'accès provenant du terminal client (CL), générer une information d'identification de serveur pour le serveur réel (RS1-RS5) déterminé et coder l'information d'identification de serveur générée qui peut être décodée en utilisant une information clef commune aux éléments de partage de charge (LB1-LB3),
ajouter l'information d'identification de serveur codée à l'information d'identification d'accès,
réaliser la connexion du terminal client (CL) avec le serveur réel (RS 1-RS5) déterminé en envoyant le message de demande d'accès au serveur réel (RS1-RS5) déterminé,
à la réception, à partir du terminal client (CL) d'un second message de demande d'accès basé sur l'information d'identification d'accès à laquelle l'information d'identification de serveur codée a été ajoutée, après qu'un message de réponse comprenant l'information d'identification de serveur codée ait été renvoyée au terminal client (CL) à partir du serveur réel (RS1-RS5) déterminé par l'intermédiaire du réseau (NW), extraire l'information d'identification de serveur codée de l'information d'identification d'accès dans le second message de demande d'accès et décoder l'information d'identification de serveur codée en utilisant l'information clef commune aux éléments de partage de charge (LB 1-LB3), et
envoyer le message de demande d'accès au serveur réel (RS1-RS5) identifié en utilisant l'information d'identification de serveur décodée.
